# DEMANDE DE BREVET EUROPEEN

(11) **EP 3 741 785 A1**
(43) Date de publication de la demande: **25.11.2020**
(21) Numéro de dépôt: 20184638.3
(22) Date de dépôt: 09.12.2013
(51) Int. Cl.: C08F 214/22, C08J 5/18

(54) **TERPOLYMÈRES ET FILMS PRÉPARÉS À PARTIR DE CEUX-CI**

(30) Priorité: 11.12.2012 FR 1261885
(62) Demande divisionnaire de: 13821118.0
(71) Demandeur: ARKEMA FRANCE, 92700 Colombes (FR)
(72) Inventeur: DOMINGUES DOS SANTOS, Fabrice, 92705 Colombes Cedex (FR); LANNUZEL, Thierry, 69493 Pierre-Benite Cedex (FR); ZHANG, Shihai, State College, Pennsylvania 16803 (US)
(74) Mandataire: Arkema Patent

(57) **Abrégé**

L'invention concerne un polymère comprenant des unités structurales de fluorure de vinylidène, de trifluoroéthylène et de chlorotrifluoroéthylène, le rapport molaire entre le fluorure de vinylidène et le trifluoroéthylène dans le polymère étant de 55:45 à 65:35, et la proportion molaire des unités structurales de chlorotrifluoroéthylène dans le polymère étant de 1,5 à 5,5 %.

L'invention concerne également divers articles comprenant ce polymère, tels que des films, des fibres, des plaques extrudées et des articles moulés.

## Description

### DOMAINE TECHNIQUE

La présente invention concerne des terpolymères obtenus par polymérisation de fluorure de vinylidène (VDF), de trifluoroéthylène (TrFE) et de chlorotrifluoroéthylène (CTFE), ainsi que l'utilisation desdits terpolymères pour la fabrication de divers articles tels que des films, des fibres, des plaques extrudées et des articles moulés.

### ARRIÈRE-PLAN TECHNIQUE

Les matériaux ferroélectriques et ferroélectriques relaxeurs qui génèrent un actionnement mécanique induit par un champ électrique externe ont attiré beaucoup d'attention et ont été reconnus pour des applications dans divers transducteurs, actionneurs et capteurs. Parmi ces matériaux, les copolymères à base de VDF/TrFE ont été étudiés de manière importante.

La production d'actionneurs à base de films minces de terpolymères à base de VDF/TrFE empilés et munis d'électrodes est notamment connue. Il est souhaitable d'activer ces actionneurs avec une tension électrique faible (telle qu'inférieure à 150 V, voire inférieure à 50 V), ce qui nécessite une épaisseur de film mince. D'un autre côté, les films polymères doivent avoir une rigidité suffisante pour pouvoir être facilement manipulés et ne pas présenter un risque élevé de rupture et de déformation pendant la production. Par ailleurs, ils doivent également présenter une densité élevée d'énergie élastique lorsqu'ils sont soumis à un champ électrique de 50 à 100 V/µm.

Le document EP 206 926 décrit des matériaux diélectriques constitués d'un alliage de polymères ferroélectriques à températures de Curie différentes. Des alliages comprenant des terpolymères à base de VDF, TrFE et CTFE sont utilisés, entre autres, le taux molaire de CTFE dans lesdits terpolymères étant de 5% ou de 10% (courbes 14 et 15, respectivement, fig. 6). Les alliages sont réalisés par malaxage en phase fondue des différents composants, les mélanges obtenus étant ensuite pressés sous forme de films de 100 à 200 µm.

Le document US 4,554,335 concerne des matériaux polymères diélectriques comprenant 25 à 90 % en moles de VDF, 5 à 70 % en moles de TrFE et de 1 à 13 % en moles de CTFE. La polymérisation en suspension, la polymérisation en solution et la polymérisation en émulsion sont citées comme procédés de polymérisation appropriés. Les matériaux ainsi obtenus sont ensuite comprimés à chaud à 200 °C pour former des films ayant une épaisseur généralement de 150 µm.

Le document US 4,543,293 concerne des matériaux copolymères à base de VDF façonnés et polarisés. Le copolymère comprend 40 à 87 % en moles de VDF, 10 à 40 % en moles de TrFE et 3 à 20 % en moles de fluorure de vinyle (VF). Ils sont préparés par polymérisation en masse, et sont coulés avec du diméthylformamide en tant que solvant pour obtenir des films coulés d'environ 30 µm d'épaisseur.

Le document US 5,087,679 décrit un matériau diélectrique polymère composé de 60 à 79 % en moles de VDF, 18 à 22 % en moles de TrFE et 3 à 22 % en moles de CTFE. Des films ayant une épaisseur de 3 mm sont obtenus par compression thermique du polymère, suivie par une trempe avec de l'eau. La polymérisation en suspension, la polymérisation en émulsion et la polymérisation en solution peuvent être utilisées pour préparer ces polymères.

Le document US 6,355,749 concerne des terpolymères ferroélectriques comprenant 50 à 80 % en moles de VDF, 15 à 40 % en moles de TrFE et 2 à 20 % en moles d'un monomère volumineux tel que le CTFE ou l'hexafluoropropène (HFP). Dans les modes de réalisation donnés en exemple, la quantité de CTFE va de 6,7 à 12,5 % en moles. La constante diélectrique de ces terpolymères est supérieure à 40, et des films de 30 µm d'épaisseur sont préparés à partir de ces terpolymères. Le procédé de fabrication enseigné par ce document comprend une polymérisation en masse et un procédé initié par des radicaux libres activés par de l'oxygène.

L'article Electrostrictive Properties of Poly(vinylidene fluoride-trifluoroethylene-chlorotrifluoroethylene), par Buckley et al. dans Chem. Matters 14:2590-2593 (2002) concerne des polymères de VDF/TrFE/CTFE préparés par polymérisation en masse et initiation par radicaux libres activés par de l'oxygène, contenant des niveaux de CTFE d'environ 5 à 10 % en moles (en réalité 5,8 à 10,3 % en moles selon le tableau 1). Un module mécanique moyen d'environ 0,2 GPa est mesuré pour ces polymères.

L'article High Electromechanical Responses in a Poly(vinylidene fluoride-trifluoroethylene-chlorofluoroethylene) terpolymer, par Xia et al. dans Advanced Materials 14:1574-1577 (2002) décrit un premier terpolymère ayant une composition molaire de 62 parties de VDF, 38 parties de TrFE et 4 parties de CFE, et un second terpolymère ayant une composition molaire de 65 parties de VDF, 35 parties de TrFE et 10 parties de CTFE. Le procédé de synthèse est fondé sur la polymérisation en masse. Des films sont produits par coulage en solvant et recuit, résultant en une épaisseur de film d'environ 20 µm. Le module élastique du polymère de VDF/TrFE/CTFE est dit être de 0,4 GPa.

Le document US 6,787,238 concerne des systèmes terpolymères et leurs applications électromécaniques et diélectriques. Les systèmes terpolymères sont préparés par des procédés de polymérisation classiques tels que la polymérisation en suspension, en émulsion ou en solution. Les systèmes terpolymères sont composés de 55 à 75 % en moles de VDF, 15 à 35 % en moles de TrFE, le reste étant du CTFE ; ou de 55 à 80 % en moles de VDF, 15 à 40 % en moles de TrFE, le reste étant du CFE. La constante diélectrique de ces systèmes terpolymères est supérieure à 40.

Par exemple, le document US 7,078,101 décrit des films terpolymères électrostrictifs à déformation élevée, comprenant 65 à 71 % en moles de VDF, 26 à 33 % en moles de TrFE et 1 à 6 % en moles d'un troisième monomère, qui peut être le 1,1-chlorofluoroéthylène (CFE) ou le 1,2-chlorofluoroéthylène. Le document ne contient aucun détail sur le procédé de polymérisation. Des valeurs de module élastique d'environ 400 MPa sont fournies dans le document.

Le document US 7,750,098 concerne des terpolymères constitués de 40 à 70 % en moles de VDF, 20 à 40 % en moles de TrFE, le reste étant du CFE. La constante diélectrique de ces polymères est supérieure à 50, et le module élastique va de 300 à 350 MPa selon la section des exemples. Les polymères sont fabriqués en utilisant la polymérisation en suspension, par injection continue de tous les monomères dans un autoclave à température et pression constantes. Des films d'une épaisseur de 30 µm sont préparés à partir de ces polymères.

Le document WO 2010/116105 enseigne un procédé de production de terpolymères à base de VDF, TrFE et CFE ou CTFE, comprenant un chargement initial de deux premiers monomères, puis un ajout continu de tous les monomères dans le réacteur, à une pression constante. Les polymères ainsi obtenus sont caractérisés par une teneur molaire en VDF de 30 à 80 %, une teneur molaire en TrFE de 5 à 60 %, et une teneur molaire de CFE ou CTFE de 3 à 20 %. Selon le mode de réalisation préféré, la teneur en VDF est de 61,8 % en moles, la teneur en TrFE est de 29,8 % en moles et la teneur en CFE est de 8,5 % en moles. La constante diélectrique de ces polymères est supérieure à 50.

L'article Relaxor Fluorinated Polymers: novel applications and recent developments, dans IEEE Trans. Diel. El. Insul., 17:1106-1112 (2010) décrit un premier terpolymère comprenant 65 parties de VDF, 35 parties de TrFE et 8,6 parties de CFE ; et un second terpolymère comprenant 66 parties de VDF, 64 parties de TrFE et 8,3 parties de CTFE. Le module élastique du polymère de VDF/TrFE/CFE est d'environ 0,3 à 0,4 GPa.

Dans la majorité des documents de l'art antérieur ci-dessus, le module élastique des systèmes polymères à base de VDF/TrFE est relativement faible, par exemple inférieur à 0,4 GPa pour les polymères de VDF/TrFE/CTFE. Il est par conséquent souhaitable de proposer d'autres systèmes polymères électroactifs à base de VDF/TrFE ayant un module élastique plus élevé, de manière à ce qu'ils puissent plus facilement être manipulés et davantage transformés (par exemple métallisé), notamment lorsqu'ils sont sous la forme de films très minces.

### RESUME DE L'INVENTION

Un premier objectif de l'invention est de proposer un polymère comprenant des unités structurales de fluorure de vinylidène, de trifluoroéthylène et de chlorotrifluoroéthylène, le rapport molaire entre le fluorure de vinylidène et le trifluoroéthylène dans le polymère étant de 55:45 à 65:35, et la proportion molaire des unités structurales de chlorotrifluoroéthylène dans le polymère étant de 1,5 à 5,5%.

Selon un mode de réalisation, le polymère est constitué d'unités structurales de fluorure de vinylidène, de trifluoroéthylène et de chlorotrifluoroéthylène.

Selon un mode de réalisation, le polymère a un poids moléculaire moyen en poids d'au moins 100 000, de préférence d'au moins 200 000 et de manière davantage préférée d'au moins 300 000 ou d'au moins 400 000.

Selon un mode de réalisation, la proportion molaire d'unités structurales de chlorotrifluoroéthylène dans le polymère est de 1,8 à 5,5%, de préférence de 3,2 % à 5,5 % et de manière davantage préférée de 3,4 % à 5,5 %.

Un deuxième objectif de l'invention est de proposer un polymère pouvant être obtenu par un procédé de polymérisation partant de monomères de fluorure de vinylidène, de trifluoroéthylène et de chlorotrifluoroéthylène, le rapport molaire entre les monomères de fluorure de vinylidène et les monomères de trifluoroéthylène étant de 55:45 à 65:35, et la proportion molaire des monomères de chlorotrifluoroéthylène par rapport au total des monomères de fluorure de vinylidène, de trifluoroéthylène et de chlorotrifluoroéthylène est de 1,5 à 5,5%.

Selon un mode de réalisation, le polymère a un poids moléculaire moyen en poids d'au moins 100 000, de préférence d'au moins 200 000 et de manière davantage préférée d'au moins 300 000 ou d'au moins 400 000.

Selon un mode de réalisation, la proportion molaire des monomères de chlorotrifluoroéthylène par rapport au total des monomères de fluorure de vinylidène, de trifluoroéthylène et de chlorotrifluoroéthylène est de 1,8 à 5,5%, de préférence de 3,2 % à 5,5 % et de manière davantage préférée de 3,4 % à 5,5 %.

Selon un mode de réalisation, le procédé est un procédé de polymérisation en suspension.

Selon un mode de réalisation, le procédé comprend les étapes successives suivantes :
(1) le chargement d'un réacteur avec un mélange initial de monomères ;
(2) l'ajout d'un initiateur de polymérisation radicalaire au réacteur ;
(3) l'ajout continu d'un second mélange de monomères au réacteur pour réaliser une polymérisation à une pression essentiellement constante.

Selon un mode de réalisation, le mélange initial comprend des monomères de fluorure de vinylidène et de trifluoroéthylène, sans monomères de chlorotrifluoroéthylène ; et le second mélange comprend des monomères de fluorure de vinylidène, de trifluoroéthylène et de chlorotrifluoroéthylène.

Un troisième objectif de l'invention est de proposer un polymère comprenant des unités structurales de fluorure de vinylidène, de trifluoroéthylène et de chlorotrifluoroéthylène, qui est approprié pour être mis sous la forme d'un film ayant un module élastique d'au moins 0,5 GPa, de préférence d'au moins 0,6 GPa.

Selon un mode de réalisation, le rapport molaire entre le fluorure de vinylidène et le trifluoroéthylène est de 55:45 à 75:25, de préférence de 55:45 à 65:35 ou de 62:38 à 72:28 ; et/ou la proportion molaire des unités structurales de chlorotrifluoroéthylène dans le polymère est de 1,5 à 5,5 %, avantageusement de 1,5 à 4,5%, de préférence de 1,8 à 5,5 %, ou encore de 1,8 à 4,5%, de manière davantage préférée de 3,2 % à 4,5 % et de manière préférée entre toutes de 3,4 % à 4,5 % ; et/ou le polymère est constitué d'unités structurales de fluorure de vinylidène, de trifluoroéthylène et de chlorotrifluoroéthylène.

Selon un mode de réalisation, le film :
- a une constante diélectrique inférieure à 40 à 1 kHz et 25 °C ; et/ou
- a une déformation électrostrictive à 25 °C d'au moins 0,25 %, de préférence d'au moins 0,4 %, sous un gradient de champ électrique de 50 MV/m ; ou d'au moins 0,7 %, de préférence d'au moins 1 %, sous un gradient de champ électrique de 100 MV/m ; et/ou
- a une épaisseur inférieure à 30 µm, de préférence une épaisseur de 1 à 5 µm, et de manière davantage préférée une épaisseur de 1 à 3 µm.

Selon un mode de réalisation, le film est produit par coulage en solvant, par extrusion ou par compression par fusion à chaud, puis éventuellement étiré, puis recuit. L'étirement (lorsqu'il est réalisé) est de préférence effectué en un facteur de 2 à 10, de manière davantage préférée de 5 à 7.

Un autre objectif de l'invention est de proposer divers articles comprenant le polymère selon l'invention, tels que des films, des fibres, des plaques extrudées et des articles moulés.

Un autre objectif de l'invention est de proposer un film comprenant le polymère selon l'un quelconque des modes de réalisation précédents, ou de préférence constitué par le polymère selon l'un quelconque des modes de réalisation précédents.

Selon un mode de réalisation, le film a un module élastique d'au moins 0,5 GPa, de préférence d'au moins 0,6 GPa.

Un autre objectif de l'invention est de proposer un film comprenant un polymère qui comprend des unités structurales de fluorure de vinylidène, de trifluoroéthylène et de chlorotrifluoroéthylène, le film ayant un module élastique d'au moins 0,5 GPa, de préférence d'au moins 0,6 GPa.

Selon un mode de réalisation, le rapport molaire entre les unités structurales de fluorure de vinylidène et de trifluoroéthylène dans le polymère est de 55:45 à 75:25, de préférence de 55:45 à 65:35 ou de 62:38 à 72:28 ; et/ou la proportion molaire des unités structurales de chlorotrifluoroéthylène dans le polymère est de 1,5 à 5,5 %, avantageusement de 1,5 à 4,5%, de préférence de 1,8 à 5,5 %, ou encore de 1,8 à 4,5%, de manière davantage préférée de 3,2 % à 4,5 % et de manière préférée entre toutes de 3,4 % à 4,5 %; et/ou le polymère est constitué d'unités structurales de fluorure de vinylidène, de trifluoroéthylène et de chlorotrifluoroéthylène.

Selon un mode de réalisation, le film a une constante diélectrique inférieure à 40 à 1 kHz et 25 °C ; et/ou a une déformation électrostrictive à 25 °C d'au moins 0,25 %, de préférence d'au moins 0,4 %, sous un gradient de champ électrique de 50 MV/m ; ou d'au moins 0,7 %, de préférence d'au moins 1 %, sous un gradient de champ électrique de 100 MV/m.

Selon un mode de réalisation, le film a une épaisseur inférieure à 30 µm, de préférence une épaisseur de 1 à 5 µm, et de manière davantage préférée une épaisseur de 1 à 3 µm.

Un autre objectif de l'invention est de proposer un procédé de fabrication du polymère selon l'un quelconque des modes de réalisation précédents, comprenant la polymérisation de monomères de fluorure de vinylidène, de monomères de trifluoroéthylène et de monomères de chlorotrifluoroéthylène.

Selon un mode de réalisation, le procédé est réalisé par polymérisation en suspension.

Selon un mode de réalisation, le procédé comprend les étapes successives suivantes :
(1) le chargement d'un réacteur avec un mélange initial de monomères ;
(2) l'ajout d'un initiateur de polymérisation radicalaire au réacteur ;
(3) l'ajout continu d'un second mélange de monomères au réacteur pour réaliser une polymérisation à une pression essentiellement constante.

Selon un mode de réalisation, le mélange initial comprend des monomères de fluorure de vinylidène et de trifluoroéthylène, sans monomères de chlorotrifluoroéthylène ; et le second mélange comprend des monomères de fluorure de vinylidène, de trifluoroéthylène et de chlorotrifluoroéthylène.

Selon un mode de réalisation, la pression dans le réacteur aux étapes (2) et (3) est d'au moins 80 bar ; et la température dans le réacteur aux étapes (2) et (3) est de 40 à 60 °C.

Un autre objectif de l'invention est de proposer un procédé de fabrication du film selon l'un quelconque des modes de réalisation précédents, comprenant une étape de production d'un film, éventuellement une étape d'étirement dudit film, et une étape de recuit dudit film. Selon un mode de réalisation, l'étape de production d'un film est réalisée par coulage en solvant, par extrusion ou par compression par fusion à chaud, de préférence par coulage en solvant, et de manière davantage préférée par coulage en solvant de la composition précédente.

La présente invention rend possible de surmonter les inconvénients de l'art antérieur. En particulier, l'invention permet d'obtenir des systèmes polymères électroactifs à base de VDF/TrFE ayant un module élastique plus élevé, qui peuvent facilement être manipulés et davantage transformés (p. ex. métallisés), notamment lorsqu'ils sont mis sous la forme de films minces. Les polymères de l'invention rendent notamment possible de fabriquer des films plus minces que ceux obtenus selon l'art antérieur.

Ceci est principalement obtenu par le choix de rapports appropriés entre les monomères ou unités structurales de VDF, TrFE et CTFE, et éventuellement par un ajustement correct de certaines caractéristiques du procédé de polymérisation.

Selon des modes de réalisation particuliers, l'invention présente également une ou de préférence plusieurs des caractéristiques avantageuses suivantes :
- le CTFE est utilisé en tant que troisième monomère, car ce monomère est plus facilement disponible pour l'utilisation industrielle et plus facile à mettre en œuvre. Il ne nécessite notamment pas d'être stabilisé pendant le stockage, et il est plus facile à contrôler pendant la synthèse. Aucun terpolymère de VDF/TrFE/CTFE ayant un module élastique élevé d'au moins 0,5 GPa n'a été rapporté dans l'art antérieur discuté précédemment.
- La constante diélectrique des films polymères de l'invention est de préférence inférieure à 40. Ceci rend possible de réduire la consommation d'énergie lors de l'utilisation du matériau. La valeur de la constante diélectrique dépend principalement de la composition de monomères du film polymère.
- Les polymères de l'invention sont avantageusement fabriqués par un procédé de polymérisation en suspension comprenant l'ajout continu des monomères dans le réacteur. Ce procédé est plus facile à mettre en œuvre que la polymérisation en masse classique (notamment à l'échelle industrielle), et il a également un impact sur la structure des polymères résultants, notamment sur la distribution des monomères dans les polymères. Par ailleurs, le poids moléculaire des polymères résultants est généralement plus élevé que celui des polymères obtenus par polymérisation en masse, ce qui est un facteur important pour la production de films pouvant être étirés sans défaillance. Encore plus avantageusement, l'étape de polymérisation initiale est réalisée avec uniquement du VDF et du TrFE (sans le monomère de CTFE). Ceci assure une meilleure homogénéité et une meilleure reproductibilité.

### DESCRIPTION DE MODES DE REALISATION

L'invention sera maintenant décrite plus en détail sans limitation dans la description suivante. Sauf indication contraire, tous les pourcentages sont des pourcentages en moles. Les poids moléculaires sont exprimés en g/mol.

Bien que des terpolymères ayant la composition revendiquée puissent être produits en utilisant tout procédé connu, tel que la polymérisation en émulsion, la polymérisation en suspension et la polymérisation en solution, il est préférable d'utiliser le procédé décrit dans WO 2010/116105.

En bref, le procédé préféré comprend les étapes suivantes :
- le chargement d'un mélange initial de VDF et de TrFE (sans CTFE) dans un autoclave agité contenant de l'eau ;
- le chauffage de l'autoclave à une température prédéterminée, proche de la température de polymérisation ;
- l'injection d'un initiateur de polymérisation radicalaire mélangé avec de l'eau dans l'autoclave, afin d'atteindre une pression dans l'autoclave qui est de préférence d'au moins 80 bar, afin de former une suspension des monomères de VDF et de TrFE dans de l'eau ;
- l'injection d'un second mélange de VDF, TrFE et CTFE dans l'autoclave ;
- dès que la réaction de polymérisation démarre, l'injection continue dudit second mélange dans le réacteur autoclave, afin de maintenir la pression à un niveau essentiellement constant de préférence d'au moins 80 bar.

L'initiateur de polymérisation radicalaire peut être un peroxyde organique tel qu'un peroxydicarbonate. Il est généralement utilisé en une quantité de 0,1 à 10 g par kilogramme du chargement total de monomères. De préférence, la quantité utilisée est de 0,5 à 5 g/kg.

Le mélange initial comprend avantageusement uniquement du VDF et du TrFE en une proportion égale à celle du polymère final souhaité.

Le second mélange a avantageusement une composition qui est ajustée de manière à ce que la composition totale de monomères introduite dans l'autoclave, y compris le mélange initial et le second mélange, soit égale ou approximativement égale à la composition du polymère final souhaité.

Le rapport en poids entre le second mélange et le mélange initial est de préférence de 0,5 à 2, de manière davantage préférée de 0,8 à 1,6.

La mise en œuvre de ce procédé avec un mélange initial et un second mélange rend le procédé indépendant de la phase d'initiation de la réaction, qui est souvent imprévisible. Les terpolymères ainsi obtenus sont sous la forme d'une poudre, sans croûte ou peau.

La pression dans le réacteur autoclave est de préférence de 80 à 110 bar, et la température est maintenue à un niveau de préférence de 40 °C à 60 °C.

Le second mélange est injecté en continu dans l'autoclave. Il peut être comprimé avant d'être injecté dans l'autoclave, par exemple en utilisant un compresseur ou deux compresseurs successifs, généralement à une pression supérieure à la pression dans l'autoclave.

Bien que, selon certains modes de réalisation, des monomères supplémentaires puissent être utilisés en tant que matériaux de départ (en une quantité mineure, telle que p. ex. inférieure à 5 % ou inférieure à 2 % ou inférieure à 1 %) et que le terpolymère de l'invention résultant puisse par conséquent comprendre une quantité mineure (telle que par exemple inférieure à 5 % ou inférieure à 2 % ou inférieure à 1 %) d'autres unités structurales que celles citées précédemment, seuls des monomères de VDF, TrFE et CTFE sont de préférence utilisés en tant que matériaux de départ, de manière à ce que le polymère soit composé uniquement de trois unités structurales, c.-à-d. VDF, TrFE et CTFE.

Les quantités respectives des monomères utilisés en tant que matériaux de départ, et par conséquent les quantités respectives des unités structurales dans le polymère, sont ajustées pour que le module élastique ait une valeur souhaitée, et éventuellement pour que la déformation électrostrictive et/ou la constante diélectrique aient des valeurs souhaitées.

Généralement, le rapport molaire VDF/TrFE des monomères utilisés en tant que matériaux de départ et/ou le rapport molaire VDF/TrFE dans le polymère est de 55:45 à 75:25 et de manière davantage préférée de 62:38 à 72:28.

Selon certains modes de réalisation, le rapport molaire VDF/TrFE est de 55:45 à 56:44 ou de 56:44 à 57:43 ou de 57:43 à 58:42 ou de 58:42 à 59:41 ou de 59:41 à 60:40 ou de 60:40 à 61:39 ou de 61:39 à 62:38 ou de 62:38 à 63:37 ou de 63:37 à 64:36 ou de 64:36 à 65:35 ou de 65:35 à 66:34 ou de 66:34 à 67:33 ou de 67:33 à 68:32 ou de 68:32 à 69:31 ou de 69:31 à 70:30 ou de 70:30 à 71:29 ou de 71:29 à 72:28 ou de 72:28 à 73:27 ou de 73:27 à 74:24 ou de 74:24 à 75:25.

Généralement, la proportion molaire des monomères de CTFE par rapport à la quantité totale de monomères dans les matériaux de départ et/ou la proportion molaire des unités structurales de CTFE dans le polymère est de 1,5 à 4,5%. Des plages préférées sont de 1,8 à 4,5%, de préférence de 3,2 % à 4,5 % et de manière davantage préférée de 3,4 % à 4,5 %.

Selon certains modes de réalisation, la proportion molaire de CTFE est de 1,5 à 1,6 % ou de 1,6 to 1,7 % ou de 1,7 à 1,8 % ou de 1,8 à 1,9 % ou de 1,9 à 2,0 % ou de 2,0 à 2,1 % ou de 2,1 à 2,2 % ou de 2,2 à 2,3 % ou de 2,3 à 2,4 % ou de 2,4 à 2,5 % ou de 2,5 à 2,6 % ou de 2,6 à 2,7 % ou de 2,7 à 2,8 % ou de 2,8 à 2,9 % ou de 2,9 à 3,0 % ou de 3,0 à 3,1 % ou de 3,1 à 3,2 % ou de 3,2 à 3,3 % ou de 3,3 à 3,4 % ou de 3,4 à 3,5 % ou de 3,5 à 3,6 % ou de 3,6 à 3,7 % ou de 3,7 à 3,8 % ou de 3,8 à 3,9 % ou de 3,9 à 4,0 % ou de 4,0 à 4,1 % ou de 4,1 à 4,2 % ou de 4,2 à 4,3 % ou de 4,3 à 4,4 % ou de 4,4 à 4,5 % ou de 4,5 à 4,6 % ou de 4,6 à 4,7 % ou de 4,7 à 4,8 % ou de 4,8 à 4,9 % ou de 4,9 à 5,0 % ou de 5,0 à 5,1 % ou de 5,1 à 5,2 % ou de 5,2 à 5,3 % ou de 5,3 à 5,4 % ou de 5,4 à 5,5 %.

Un exemple d'un polymère préféré est caractérisé par un rapport molaire VDF/TrFE d'environ 65:35 et une teneur en CTFE d'environ 3,7 %.

Le rapport molaire VDF/TrFE dans le polymère peut être déterminé par RMN du proton. Le polymère est dissous dans un solvant deutéré approprié et le spectre RMN est enregistré sur un spectromètre RMN-FT équipé d'une sonde multi-nucléaire. Le noyau hydrogène de l'unité TrFE (CHF=CF₂) donne un signal distinctif à environ 5 ppm, tandis que les 2 atomes d'hydrogène du groupe CH₂ des unités VDF donnent un massif centré à 3 ppm. L'intégration relative des deux signaux donne l'abondance relative des deux monomères, c'est-à-dire leur rapport molaire.

La quantité de CTFE peut être déterminée par une mesure de la teneur en chlore par analyse élémentaire. La combinaison des deux résultats rend possible de calculer la composition molaire du terpolymère.

La masse molaire moyenne en poids Mw du polymère est de préférence d'au moins 100 000, de préférence d'au moins 200 000 et de manière davantage préférée d'au moins 300 000 ou d'au moins 400 000. Elle peut être ajustée par modification de certains paramètres du procédé, tels que la température dans le réacteur, ou par ajout d'un agent de transfert.

La distribution de poids moléculaire peut être estimée par SEC (chromatographie d'exclusion stérique) avec du diméthylformamide (DMF) en tant qu'éluant, avec un ensemble de 3 colonnes de porosité croissante. La phase stationnaire est un gel de styrène-DVB. Le procédé de détection est fondé sur une mesure de l'indice de réfraction, et l'étalonnage est réalisé avec des étalons de polystyrène. L'échantillon est mis en solution à 0,5 g/L dans du DMF et filtré sur un filtre en nylon de 0,45 µm.

Le poids moléculaire peut également être évalué par mesure de l'indice de fluidité à 230 °C sous une charge de 5 kg selon ASTM D1238 (ISO 1133).

Par ailleurs, le poids moléculaire peut également être caractérisé par une mesure de la viscosité en solution selon ISO 1628. La méthyléthylcétone (MEK) est un solvant préféré des terpolymères pour la détermination de l'indice de viscosité.

Des films peuvent être préparés en utilisant le terpolymère de l'invention, par exemple par coulage en solvant ou extrusion ou compression par fusion à chaud, et recuit ultérieur (c.-à-d. chauffage par exemple pendant plusieurs heures à une température de 100 à 120 °C, et refroidissement).

Par exemple, une poudre polymère peut être dissoute dans du DMF à une concentration de 3 %, puis filtrée avec un filtre de 1 µm. La solution peut être versée sur une lame en verre propre sur une plaque chauffante réglée à 60 °C. Après séchage pendant environ 5 heures, le film peut être décollé et séché dans un four sous vide à 100 °C pendant la nuit. Le film séché peut être étiré dans une direction à un taux d'étirement d'environ 5 à 7. Le film étiré peut être recuit dans un four à air forcé à 80 °C pendant 5 heures, puis à une température comprise entre 105 °C et 120 °C pendant 3 heures.

L'invention rend possible d'obtenir des films minces ayant une épaisseur aussi mince que 1 à 5 µm, et de préférence 1 à 3 µm. Si nécessaire, des films ayant une épaisseur intermédiaire de 15 à 25 µm sont tout d'abord préparés, puis sont étirés d'un facteur de 2 à 10, de préférence de 5 à 7 (p. ex. tel que décrit précédemment) pour obtenir l'épaisseur finale souhaitée.

Les films de l'invention sont de préférence caractérisés par une constante diélectrique à 1 kHz et à 25 °C qui est inférieure à 40, et de manière davantage préférée inférieure à 30 ou inférieure à 20.

Afin de mesurer les caractéristiques diélectriques du film polymère, le film est métallisé par pulvérisation d'électrodes en or de 30 nm d'épaisseur sur les deux surfaces d'un diamètre de 12 mm. L'éprouvette de film métallisée est maintenue entre deux connecteurs métalliques en argent dans un four Delta Design. Un analyseur d'impédance QuadTech 7600 Plus est utilisé pour mesurer la capacité, le facteur de dissipation et la constante diélectrique en fonction de la température et de la fréquence.

Les films de l'invention sont également de préférence caractérisés par un module élastique d'au moins 0,5 GPa, et de manière davantage préférée d'au moins 0,6 GPa ou d'au moins 0,7 GPa ou d'au moins 0,8 GPa ou d'au moins 0,9 GPa ou d'au moins 1 GPa ou d'au moins 1,1 GPa ou d'au moins 1,2 GPa ou d'au moins 1,3 GPa ou d'au moins 1,4 GPa.

La mesure du module élastique est réalisée selon ASTM D1708. Des éprouvettes sont découpées avec un emporte-pièce en forme d'os, d'une largeur de 5 mm et d'une longueur de 22 mm. Un appareil Instron de modèle 5866 est utilisé pour mesurer le module. Une cellule de charge de 100 N est utilisée avec une vitesse de traverse de 25,4 mm/min. La température d'essai est de 23 °C. Le module sécant à une déformation de 1 % est utilisé.

Ces films sont également de préférence caractérisés par une déformation électrostrictive à 25 °C d'au moins 0,25 %, de préférence d'au moins 0,4 %, de manière davantage préférée d'au moins 1 % ou d'au moins 1,5 %, sous un gradient de champ électrique de 50 MV/m. En variante, ils peuvent être caractérisés par une déformation électrostrictive à 25 °C d'au moins 0,7 %, de préférence d'au moins 1 %, de manière davantage préférée d'au moins 1,5 % ou d'au moins 2 % ou d'au moins 2,5 % ou d'au moins 3 %, sous un gradient de champ électrique de 100 MV/m. Selon certains autres modes de réalisation, la déformation électrostrictive sous un gradient de champ électrique de 100 MV/m est inférieure à 3 %, par exemple inférieure à 2,5 % ou inférieure à 2 %.

Afin de mesurer la déformation électrostrictive sous le champ appliqué, l'éprouvette de déformation est métallisée des deux côtés avec une électrode en or de 25 mm x 13 mm. La direction de 13 mm est parallèle à la direction d'étirement. Des fils métalliques minces sont collés sur la zone métallisée avec de l'époxy argent. Une petite tension est appliquée sur l'éprouvette métallisée de l'ordre de 10 à 20 g (le long de la direction d'étirement), et un champ électrique est appliqué à l'éprouvette. Le changement de dimension de l'éprouvette dans la direction d'étirement est suivi par une caméra CCD Computar qui est connectée à un ordinateur en utilisant le programme LabView. La déformation est définie par le changement de longueur de l'éprouvette/la longueur initiale de l'éprouvette.

### EXEMPLES

Les exemples suivants illustrent l'invention sans la limiter.

### Exemple 1

163 g de TrFE et 237 g de VDF sont chargés dans un réacteur agité de 3 L rempli avec 2 500 g d'eau déionisée (DI) contenant de l'éther cellulosique en tant qu'agent de dispersion. Le réacteur est ensuite porté à la température d'initiation souhaitée, cette température étant maintenue pendant la polymérisation à une valeur comprise entre 40 et 60 °C. L'initiateur peroxydicarbonate est ensuite injecté dans le réacteur et la réaction commence. La consommation des monomères conduit à une diminution de pression qui est compensée par une alimentation continue du réacteur avec un mélange VDF/TrFE/CTFE de composition molaire 60,6/32,6/6,8. La pression est ainsi maintenue dans la plage allant de 80 à 110 bar. Lorsqu'une quantité de 376 g de mélange d'alimentation est atteinte, l'injection est arrêtée et la pression chute pendant une demi-heure. Le réacteur est ensuite refroidi et dégazé, et le produit est déchargé et récupéré sous la forme d'une suspension. Cette suspension est filtrée et la poudre humide est lavée à plusieurs reprises dans de l'eau DI pure. Enfin, la poudre est séchée dans un four à température modérée jusqu'à poids constant. 570 g de poudre sèche sont récupérés (rendement 73 %).

L'analyse RMN et l'analyse élémentaire du chlore donnent la composition suivante : rapport VF2:TrFE : 65,4/34,6 ; teneur en CTFE : 3,7 % en moles.

D'autres caractérisations sont : MFR : 0,96 g/10 min, module : 622 MPa.

### Exemples 2 à 8

Le même protocole est utilisé pour les exemples suivants. La composition initiale de monomères du chargement initial dans l'autoclave et du second mélange, ainsi que les quantités d'initiateur et d'agent de transfert sont ajustées pour obtenir des compositions polymères finales différentes et des poids moléculaires différents.

Les résultats sont récapitulés dans le tableau ci-dessous :

| Exemple n° | VF2/(VF 2+TrFE) (% en moles) | CTFE (% en moles) | MFR | Module (MPa) | Déformation (%) | Constante diélectrique | Perte diélectrique (%) |
|---|---|---|---|---|---|---|---|
| 1 | 65,4 | 3,7 | 0,96 | 622 | 0,65 | 25 | 5 |
| 3 | 61,1 | 4,1 | 0,98 | 753 | 0,6 | 25 | 6 |
| 4 | 70,6 | 1,97 | 0,54 | 1158 | 0,27 | 19 | 5 |
| 5 | 73,7 | 3,1 | 0,71 | 1064 | 0,29 | 13 | 5 |
| 6 | 70,5 | 2,7 | 0,41 | 1119 | 0,27 | 21 | 5 |
| 7 (comp.) | 69 | 8,5 | 0,67 | 215 | 0,75 | | |
| 8 (comp.) | 58,4 | 8,2 | 0,24 | 237 | 0,7 | | |

Le module élastique est déterminé sur des films qui ont été étirés à un taux d'étirement de 7 et recuits à 120 °C.

La déformation électrostrictive est mesurée à 50 V/µm.

La constante diélectrique et la perte diélectrique sont déterminées à 25 °C sur des films qui ont été étirés à un taux d'étirement de 7 et recuits à 120 °C.

### Exemple 9 - Mise à l'échelle supérieure

Un réacteur d'installation pilote d'une taille de 30 litres sous vide est rempli avec 26,9 l d'eau déionisée/désoxygénée contenant 4 g d'éther cellulosique en tant qu'agent de dispersion. La vitesse d'agitation est réglée à 280 tours/minute. 1,3 kg de TrFE et 1,9 kg de VDF sont ensuite chargés et le réacteur est porté à 45 °C. Pendant ce temps, le mélange préparé auparavant des 3 monomères VDF, TrFE et CTFE d'une composition de 60,2/33,1/6,7 % en moles est comprimé à environ 100 bar. L'initiateur peroxydicarbonate est ensuite injecté dans le réacteur et, dès que la réaction commence, la consommation des monomères est compensée par l'injection du mélange de monomères. La pression est ainsi maintenue à environ 90 bar. Lorsque 2 700 g de mélange de monomères ont été introduits, l'injection est arrêtée et la pression chute à 44 bar. Le réacteur est ensuite refroidi et dégazé, et le produit est déchargé du réacteur sous la forme d'une suspension. Après filtration et lavage, la poudre humide est séchée dans un four à température modérée jusqu'à poids constant. 5 kg de poudre sèche sont récupérés (rendement 83 %).

La composition du terpolymère ainsi synthétisé, telle que donnée par l'analyse RMN, est respectivement de 62,5/34,2/3,3 % en moles pour VDF/TrFE/CTFE. Le MFR est de 0,12 g/10 min sous 5 kg.

### Autres aspects divulgués

Aspect 1. Polymère comprenant des unités structurales de fluorure de vinylidène, de trifluoroéthylène et de chlorotrifluoroéthylène, dans lequel le rapport molaire entre le fluorure de vinylidène et le trifluoroéthylène dans le polymère est de 55:45 à 65:35, et la proportion molaire des unités structurales de chlorotrifluoroéthylène dans le polymère est de 1,5 à 4,5%.
Aspect 2. Polymère selon l'aspect 1, dans lequel le polymère est constitué par des unités structurales de fluorure de vinylidène, de trifluoroéthylène et de chlorotrifluoroéthylène.
Aspect 3. Polymère selon l'aspect 1 ou 2, ayant un poids moléculaire moyen en poids d'au moins 100 000, de préférence d'au moins 200 000 et de manière davantage préférée d'au moins 300 000 ou d'au moins 400 000.
Aspect 4. Polymère selon l'une quelconque des aspects 1 à 3, dans lequel la proportion molaire des unités structurales de chlorotrifluoroéthylène dans le polymère est de 3,2 % à 4,5 %, et de préférence de 3,4 % à 4,5 %.
Aspect 5. Polymère comprenant des unités structurales de fluorure de vinylidène, de trifluoroéthylène et de chlorotrifluoroéthylène, qui est approprié pour être mis sous la forme d'un film ayant un module élastique d'au moins 0,6 GPa.
Aspect 6. Polymère selon l'aspect 5, dans lequel le rapport molaire entre le fluorure de vinylidène et le trifluoroéthylène est de 55:45 à 75:25, de préférence de 55:45 à 65:35 ou de 62:38 à 72:28 ; et/ou la proportion molaire des unités structurales de chlorotrifluoroéthylène dans le polymère est de 1,5 à 5,5 %, avantageusement de 1,5 à 4,5%, de préférence de 1,8 à 5,5 %, ou encore de 1,8 à 4,5%, de manière davantage préférée de 3,2 % à 4,5 % et de manière préférée entre toutes de 3,4 % à 4,5 %; et/ou dans lequel le polymère est constitué par des unités structurales de fluorure de vinylidène, de trifluoroéthylène et de chlorotrifluoroéthylène.
Aspect 7. Polymère selon l'aspect 5 ou 6, dans lequel le film :
   - a une constante diélectrique inférieure à 40 à 1 kHz et 25 °C ; et/ou
   - a une déformation électrostrictive à 25 °C d'au moins 0,25 %, de préférence d'au moins 0,4 %, sous un gradient de champ électrique de 50 MV/m ; ou d'au moins 0,7 %, de préférence d'au moins 1 %, sous un gradient de champ électrique de 100 MV/m ; et/ou
   - a une épaisseur inférieure à 30 µm, de préférence une épaisseur de 1 à 5 µm, et de manière davantage préférée une épaisseur de 1 à 3 µm.
Aspect 8. Polymère selon l'une quelconque des aspects 5 à 7, dans lequel le film est produit par coulage en solvant, par extrusion ou par compression par fusion à chaud, puis éventuellement étiré d'un facteur de 2 à 10, de préférence de 5 à 7, et recuit.
Aspect 9. Article comprenant le polymère selon l'une quelconque des aspects 1 à 8, choisi parmi les films, les fibres, les plaques extrudées et les articles moulés.
Aspect 10. Film comprenant le polymère selon l'une quelconque des aspects 1 à 8 ou de préférence constitué par le polymère selon l'une quelconque des aspects 1 à 8.
Aspect 11. Film selon l'aspect 10, ayant un module élastique d'au moins 0,6 GPa.
Aspect 12. Film comprenant un polymère qui comprend des unités structurales de fluorure de vinylidène, de trifluoroéthylène et de chlorotrifluoroéthylène, dans lequel le film a un module élastique d'au moins 0,6 GPa.
Aspect 13. Film selon l'aspect 12, dans lequel le rapport molaire entre le fluorure de vinylidène et le trifluoroéthylène dans le polymère est de 55:45 à 75:25, de préférence de 55:45 à 65:35 ou de 62:38 à 72:28 ; et/ou la proportion molaire des unités structurales de chlorotrifluoroéthylène dans le polymère est de 1,5 à 5,5 %, avantageusement de 1,5 à 4,5%, de préférence de 1,8 à 5,5 %, ou encore de 1,8 à 4,5%, de manière davantage préférée de 3,2 % à 4,5 % et de manière préférée entre toutes de 3,4 % à 4,5 % ; et/ou le polymère est constitué par des unités structurales de fluorure de vinylidène, de trifluoroéthylène et de chlorotrifluoroéthylène.
Aspect 14. Film selon l'une quelconque des aspects 10 à 13, ayant une constante diélectrique inférieure à 40 à 1 kHz et 25 °C ; et/ou ayant une déformation électrostrictive à 25 °C d'au moins 0,25 %, de préférence d'au moins 0,4 %, sous un gradient de champ électrique de 50 MV/m ; ou d'au moins 0,7 %, de préférence d'au moins 1 %, sous un gradient de champ électrique de 100 MV/m.
Aspect 15. Film selon l'une quelconque des aspects 10 à 14, ayant une épaisseur inférieure à 30 µm, de préférence une épaisseur de 1 à 5 µm, et de manière davantage préférée une épaisseur de 1 à 3 µm.
Aspect 16. Procédé de fabrication du polymère selon l'une quelconque des aspects 1 à 8, comprenant la polymérisation de monomères de fluorure de vinylidène, de monomères de trifluoroéthylène et de monomères de chlorotrifluoroéthylène.
Aspect 17. Procédé selon l'aspect 16, qui est réalisé par polymérisation en suspension.
Aspect 18. Procédé selon l'aspect 16 ou 17, comprenant les étapes successives suivantes :
   (1) le chargement d'un réacteur avec un mélange initial de monomères ;
   (2) l'ajout d'un initiateur de polymérisation radicalaire au réacteur ;
   (3) l'ajout continu d'un second mélange de monomères au réacteur pour réaliser une polymérisation à une pression essentiellement constante.
Aspect 19. Procédé selon l'aspect 18, dans lequel le mélange initial comprend des monomères de fluorure de vinylidène et de trifluoroéthylène, sans monomères de chlorotrifluoroéthylène ; et le second mélange comprend des monomères de fluorure de vinylidène, de trifluoroéthylène et de chlorotrifluoroéthylène.
Aspect 20. Procédé selon l'une quelconque des aspects 16 à 19, dans lequel la pression dans le réacteur aux étapes (2) et (3) est d'au moins 80 bar ; et la température dans le réacteur aux étapes (2) et (3) est de 40 à 60 °C.
Aspect 21. Procédé de fabrication du film selon l'une quelconque des aspects 10 à 15, comprenant une étape de production d'un film, éventuellement une étape d'étirement dudit film, et une étape de recuit dudit film.
Aspect 22. Procédé selon l'aspect 21, dans lequel l'étape de production d'un film est réalisée par coulage en solvant, par extrusion ou par compression par fusion à chaud, de préférence par coulage en solvant, et de manière davantage préférée par coulage en solvant de la composition selon l'aspect 17 ou 18.

## Revendications

1. Polymère comprenant des unités structurales de fluorure de vinylidène, de trifluoroéthylène et de chlorotrifluoroéthylène, dans lequel le rapport molaire entre le fluorure de vinylidène et le trifluoroéthylène dans le polymère est de 55:45 à 65:35, et la proportion molaire des unités structurales de chlorotrifluoroéthylène dans le polymère est de 1,5 à 5,5%.

2. Polymère selon la revendication 1, dans lequel le polymère est constitué par des unités structurales de fluorure de vinylidène, de trifluoroéthylène et de chlorotrifluoroéthylène.

3. Polymère selon la revendication 1 ou 2, ayant un poids moléculaire moyen en poids d'au moins 100 000, de préférence d'au moins 200 000 et de manière davantage préférée d'au moins 300 000 ou d'au moins 400 000, le poids moléculaire étant estimé par chromatographie d'exclusion stérique.

4. Polymère selon l'une quelconque des revendications 1 à 3, dans lequel la proportion molaire des unités structurales de chlorotrifluoroéthylène dans le polymère est de 3,2 % à 5,5 %, et de préférence de 3,4 % à 5,5 %.

5. Polymère comprenant des unités structurales de fluorure de vinylidène, de trifluoroéthylène et de chlorotrifluoroéthylène, qui est approprié pour être mis sous la forme d'un film ayant un module élastique d'au moins 0,5 GPa, la mesure du module élastique étant réalisée selon ASTM D1708.

6. Polymère selon la revendication 5, dans lequel le rapport molaire entre le fluorure de vinylidène et le trifluoroéthylène est de 55:45 à 75:25, de préférence de 55:45 à 65:35 ou de 62:38 à 72:28 ; et/ou la proportion molaire des unités structurales de chlorotrifluoroéthylène dans le polymère est de 1,5 à 5,5 %, avantageusement de 1,5 à 4,5%, de préférence de 1,8 à 5,5 %, ou encore de 1,8 à 4,5%, de manière davantage préférée de 3,2 % à 4,5 % et de manière préférée entre toutes de 3,4 % à 4,5 %; et/ou dans lequel le polymère est constitué par des unités structurales de fluorure de vinylidène, de trifluoroéthylène et de chlorotrifluoroéthylène.

7. Polymère selon la revendication 5 ou 6, dans lequel le film :
- a une constante diélectrique inférieure à 40 à 1 kHz et 25 °C ; et/ou
- a une déformation électrostrictive à 25 °C d'au moins 0,25 %, de préférence d'au moins 0,4 %, sous un gradient de champ électrique de 50 MV/m ; ou d'au moins 0,7 %, de préférence d'au moins 1 %, sous un gradient de champ électrique de 100 MV/m ; et/ou
- a une épaisseur inférieure à 30 µm, de préférence une épaisseur de 1 à 5 µm, et de manière davantage préférée une épaisseur de 1 à 3 µm.

8. Article comprenant le polymère selon l'une quelconque des revendications 1 à 7, choisi parmi les films, les fibres, les plaques extrudées et les articles moulés.

9. Film comprenant le polymère selon l'une quelconque des revendications 1 à 7 ou de préférence constitué par le polymère selon l'une quelconque des revendications 1 à 7.

10. Film selon la revendication 9, ayant un module élastique d'au moins 0,5 GPa, mesuré selon ASTM D1708.

11. Film comprenant un polymère qui comprend des unités structurales de fluorure de vinylidène, de trifluoroéthylène et de chlorotrifluoroéthylène, dans lequel le film a un module élastique d'au moins 0,5 GPa, mesuré selon ASTM D1708.

12. Film selon la revendication 11, dans lequel le rapport molaire entre le fluorure de vinylidène et le trifluoroéthylène dans le polymère est de 55:45 à 75:25, de préférence de 55:45 à 65:35 ou de 62:38 à 72:28 ; et/ou la proportion molaire des unités structurales de chlorotrifluoroéthylène dans le polymère est de 1,5 à 5,5 %, avantageusement de 1,5 à 4,5%, de préférence de 1,8 à 5,5 %, ou encore de 1,8 à 4,5%, de manière davantage préférée de 3,2 % à 4,5 % et de manière préférée entre toutes de 3,4 % à 4,5 % ; et/ou le polymère est constitué par des unités structurales de fluorure de vinylidène, de trifluoroéthylène et de chlorotrifluoroéthylène.

13. Film selon l'une quelconque des revendications 9 à 12, ayant une constante diélectrique inférieure à 40 à 1 kHz et 25 °C ; et/ou ayant une déformation électrostrictive à 25 °C d'au moins 0,25 %, de préférence d'au moins 0,4 %, sous un gradient de champ électrique de 50 MV/m ; ou d'au moins 0,7 %, de préférence d'au moins 1 %, sous un gradient de champ électrique de 100 MV/m.

14. Film selon l'une quelconque des revendications 9 à 13, ayant une épaisseur inférieure à 30 µm, de préférence une épaisseur de 1 à 5 µm, et de manière davantage préférée une épaisseur de 1 à 3 µm.

15. Procédé de fabrication du film selon l'une quelconque des revendications 9 à 14, comprenant une étape de production d'un film par coulage en solvant, par extrusion ou par compression par fusion à chaud, de préférence par coulage en solvant, et une étape de recuit dudit film ; et,
optionnellement une étape d'étirement dudit film, ladite étape d'étirement étant mise en œuvre avant l'étape de recuit et effectuée en un facteur de 2 à 10, de préférence en un facteur de 5 à 7.
